# EUROPEAN PATENT APPLICATION

(11) **EP 3 862 570 A1**
(43) Date of publication of application: **11.08.2021**
(21) Application number: 20155779.0
(22) Date of filing: 06.02.2020
(51) Int. Cl.: F04D 29/02, F04D 29/40, F04D 29/70, B33Y 80/00

(54) **GARDEN PUMP WITH THERMOSENSITIVE LINER**

(71) Applicant: HUSQVARNA AB, 561 82 Huskvarna (SE)
(72) Inventor: Klotz, Boris, 89075 Ulm (DE); Drößler, Christian, 89173 Lonsee (DE)
(74) Representative: Finkele, Rolf

(57) **Abstract**

A pump **(100)** includes a body **(102).** The pump **(100)** includes a water channel **(104)** adapted to allow flow of water through the pump **(100).** The pump **(100)** includes a device **(106)** arranged with the body **(102).** The device **(106)** is in contact with the water in the water channel **(104)** and is visible from outside the pump **(100).** The pump **(100)** is characterized in that the cover **(106)** is adapted to indicate temperature of water flowing through the water channel **(104)** by exhibiting a color change.

## Description

The present disclosure relates to surface pumps. More specifically, the present disclosure relates to a pump with provision of providing temperature-sensitive warnings for a safe operation.

### BACKGROUND

Surface pumps are a type of pumps which are generally used to pump water from surface sources like springs, ponds, tanks, or shallow wells. In many cases surface pumps like garden pumps have a filter cover to gain access to a filter when the filter requires maintenance, among other operations.

However, there may be instances where the opening of filter cover leads to injuries. Surface pumps like garden pumps need a certain water flow to be cooled. Sometimes water may be heated up by the pumps to a harmful temperature level which can cause harm to a user interacting with the pumps. During maintenance such as on congestion of the filter, the filter cover is opened to gain access to the filter. Opening of the filter cover while the water is above the harmful temperature level (say overheated water), may cause serious burn injuries to occur to the user.

An example of a surface pump is provided in Chinese patent application 110,121,598 (hereinafter referred to as '598 reference). The '598 reference provides a kind of sensor module as executing fault detection in a pump assembly for including electric motor and fluid pump. The sensor module includes a shell, which is configured as being attached mechanically to the pump assembly and be configured to be arranged in a hole in the pump assembly. One or more vibration-sensing elements are disposed in the shell. The sensor module includes a computing unit, which is configured to receive a sensor signal for coming from the vibration-sensing elements. Further, a calculation is executed to detect motor bearing failure and cavitation. However, the '598 reference falls short of providing a simple and user-friendly means to alert users regarding harmful temperature while handling of the pump assembly.

Thus, there is a need for an improved pump which provides temperature-sensitive warning which allows a safe operation of the pump.

### SUMMARY

In view of the above, it is an objective of the present invention to solve or at least reduce the drawbacks discussed above. The objective is at least partially achieved by a pump. The pump includes a body. The pump includes a water channel adapted to allow flow of water through the pump. The pump includes a device arranged with the body. Thereby the device is in contact with the water flowing through the water channel and is visible from outside the pump. The pump is characterized in that the device is adapted to indicate temperature of water flowing through the water channel by exhibiting a color change. Thus, the present disclosure provides a simple, efficient, and user-friendly pump which allows safe and trouble-less operation of the pump by exhibiting the temperature-sensitive color change. The term water channel means any water leading section of the pump between its water inlet and its water outlet, and is thus not restricted to a certain area of the pump body.

According to an embodiment of the present invention, the device is a window adapted to inspect the water within the water channel. This allows not only to get information about the temperature of the water but in addition to also inspect the water inside the water channel. The window could be places anywhere with the body of the pump that allows an inspection of the water within it.

According to an embodiment of the present invention, the window is a cover that provides access to the water channel. In an advantageous manner the removable cover can serve at least to functions in parallel, that is the access to two the water channel and proving an indication of the water temperature.

According to an embodiment of the present invention, the cover can be transparent. In this the cover can offer an additional function by allowing the inspection of the water channel.

According to an embodiment of the present invention, the device further includes a thermosensitive element disposed on it. The thermosensitive element changes its color when the water temperature rises above a certain threshold temperature value (say 60 degrees). It can either be placed on the device outside of the pump or it can be placed on a transparent device inside the pump within the water channel. By changing its color with changing temperature of the water within the water channel the thermosensitive device warns the user by making a warning visible.

According to an embodiment of the present invention, the thermosensitive element is a thermosensitive liner or a print on the device itself. This allows to realize the thermosensitive element in a most cost effective manner. According to an embodiment of the present invention the device is manufactured from any material that itself is able to change its color and/or its transparency with different temperatures. Thus alternative or in addition to use of a thermosensitive element disposed on the device there are different embodiments and set-ups possible to warn a user about undesired temperatures of the water within the water channel of a pump.

According to an embodiment of the present invention, the pump further includes an opening which allows access to a filter. The opening helps to maintain the filter as per service timelines, and any other requirement wherein the device is realized as a removable cover associated with this opening. By this the device exhibits not only a warning function but additionally allows access to the pump's filter for maintenance.

According to an embodiment of the present invention, the device and/or the thermosensitive liner can be manufactured by a three-dimensional printing process. Use of three-dimensional printing (alternatively, 3D printing) allows versatility of using different materials along with low lead-time in manufacturing and design of the cover. It is advantageous if a data file having pre-stored instructions to print the device and/or the thermosensitive layer using a three-dimensional (3-D) printer is provided. In an advantageous manner the device and/or the thermosensitive layer is presented in digital format.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a schematic representation of a pump, in accordance with an aspect of the present disclosure;
**FIG. 2** shows a schematic representation of the pump which provides a warning, in accordance with an aspect of the present disclosure;
**FIG. 3** shows a perspective view of a pump, in accordance with an aspect of the present disclosure; and
**FIG. 4** shows a perspective view of the pump which provides a warning, in accordance with an aspect of the present disclosure.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

In the drawings and specification, there have been disclosed preferred embodiments and examples of the invention and, although specific terms are employed, they are used in a generic and descriptive sense only and not for the purpose of limitation of the scope of the invention being set forth in the following claims. In particular with the depicted exemplary embodiments the device is realized as a removable cover that is adapted to allow flow of water through the pump **100.** Also the depicted exemplary pump has an opening that allows access to a filter within the water channel. All these examples are exemplary are not to limit the scope of the invention.

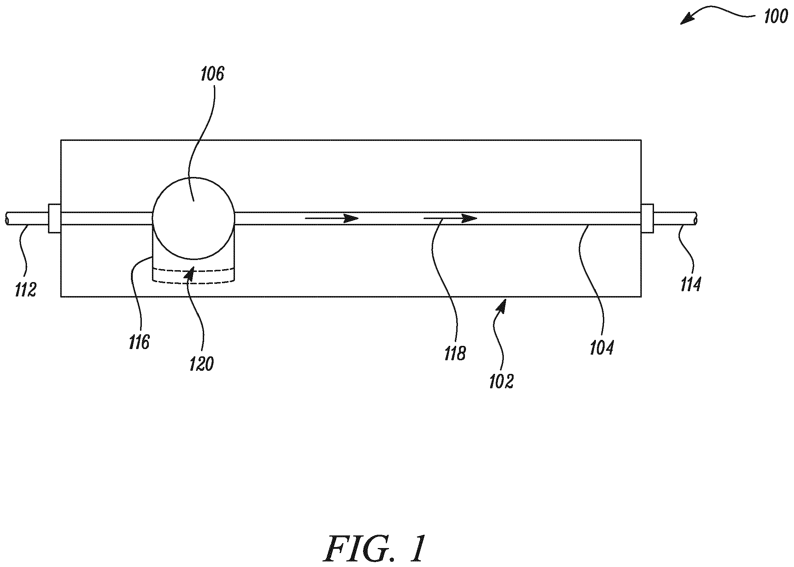

**FIG. 1** illustrates a pump **100.** The pump **100** includes a body **102**, a water channel **104**, and a cover **106.** The water channel **104** with this exemplary embodiments is a section of the pump **100** where the water is already pressurized and is forced to flow towards the outlet of the pump **100.** The cover **106** is disposed on the body **102** and adapted to provide access to the water channel **104** and/or a filter **116.** The water channel **104** has an inlet **112** and an outlet **114.** A water flow **118** takes place through the water channel **104** by entering through the inlet **112.** As will be evident to a person having knowledge in the art, the water flow **118** may have a temperature which becomes unsafe for handling by a user during working of the pump **100.** So, the pump **100** needs the water flow **118** to be cooled to temperature levels more suitable for handling by the user. Moreover, there needs to be an indicator regarding a "threshold temperature" of the water flow **118**, till which the cover **106** remains safe to open. The cover **106** works at a critical temperature (preferably **60**°C). The cover **106** is adapted to indicate temperature of water flowing through the water channel **104** by exhibiting a color change and/or by changing its transperancy. The color change can be change of transparency of the cover **106**, or any change in tinge, quality, shinning, and the like of the cover **106.** In some cases, the color change of the cover **106** can visually hide the water channel **104** and/or the filter **116** such that the user gets the indicator that the cover **106** is not safe for removal or handling. The cover **106** is present above the filter **116.** The pump **100** has an opening **120**, below the cover **106** which provides an access to the filter **116.** Presence of the cover **106** and/or the opening **120** allows the user to gain access to the filter **116**, as will be required to perform timely maintenance of the filter **116**, or any other requirement. During working of the pump **100**, the filter **116** may get blocked or stop functioning as per the requirement. This can also affect the functioning of the pump **100.** So, presence of the cover **106** allows access to the filter **116** to clear the filter **116**, and in some cases, even replacement of the filter **116** as required.

As illustrated in FIG. **1****,** the cover **106** remains in a "safe state" till it crosses the threshold temperature value. The safe state of the cover **106** indicates the user that the cover **106** can be handled or removed to gain desired access, say to the filter **116.** In the safe state, the cover **106** can be pre-set to indicate a "SAFE" state or any customized message/indicator/signal to the user, regarding the state of the cover **106.** As will be evident, below the threshold temperature value of the water flow **118**, there will be virtually no chances of any injuries or damage to the user on opening or handling of the cover **106.** There can be a setting in the pump **100** to set or change the value of the threshold temperature value, such as to suit different application requirements or user preferences. In some embodiments, the cover **106** can be transparent, black or of any other color. The color can be any radiant color for example, but need not necessarily, radiant turquoise, radiant violet, and radiant blue. The color can be any fluorescent color such as to increase visibility effect of the color for the user. When the cover **106** is transparent, the cover **106** may serve to make underlying vision better and allow better monitoring of components (say the filter **116**) below the cover **106.** In some embodiments, the cover **106** can be present on any cap or any valve (if present) covering the filter **116.** When only a single cover is present on the opening rather than on any cap it can be made up of a hard material which has high sustainability and rigidity. This prevents leakage or unnecessary distortion of the cover **106.**

In some embodiments, the inlet **112** may be connected to any water source like tap or some reservoir having water in it. The water flow **118** then travels through the water channel **104** within the pump **100** before moving through the outlet **114.** Then, the outlet **114** allows to transport water to desired destinations such as gardens, lawns and the like.

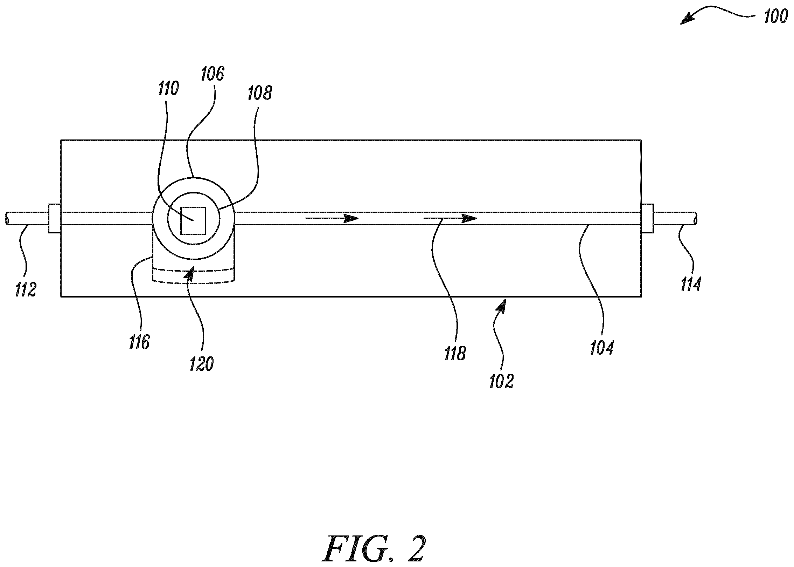

**FIG. 2** illustrates the pump **100** which provides a warning **110.** The cover **106** has an underlying thermosensitive liner **108.** The thermosensitive liner **108** illustrates the warning **110**, when the water flow **118** has a temperature which is higher than the threshold temperature. The warning **108** indicates to the user that **106**it will be unsafe to open the cover **106.** The warning **110** can be any text, pictorial indicator, color-based indicator, signal, or any audio-visual warning as used or known in the art.

During the functioning of the pump **100**, when water temperature rises above the threshold temperature, the cover **106** shows the thermosensitive liner **108** with the warning **110** (say colored). There can be one or more sensors in contact with the water flow **118** which are also operatively coupled with the thermosensitive liner **108.** The sensors communicate to the thermosensitive liner **108** when the water flow **118** has the temperature more than the threshold temperature. In some embodiments, there can be a pre-warning which alerts the user whenever temperature of the water flow **118** is rising rapidly or nearing towards the threshold temperature. This can allow the user to take necessary precautions to allow better handling or working of the pump **100.** Moreover, on getting colored, the thermosensitive liner **108** starts showing the warning **110.** The cover **106** is supposed to be opened when the warning **110** starts appearing. The thermosensitive liner **108** installed inside or with the cover **106** of the pump **100** acts as a safety feature. The thermosensitive liner **108** works directly at the critical point by showing the warning **110** when the temperature reaches the threshold temperature.

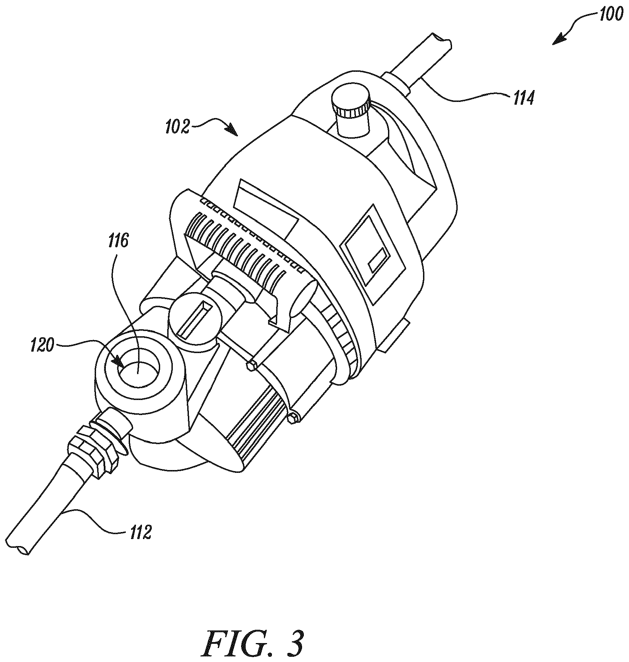

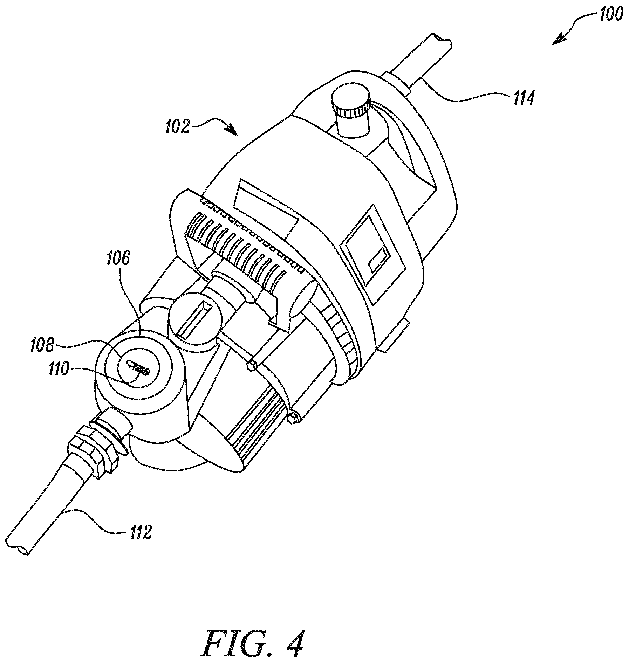

**FIGS. 3** and **4** illustrate the pump **100** before and during the warning **108** is flashed by the pump **100**, in accordance with an aspect of the present disclosure. In some embodiments, the warning **108** can show any message like "DANGER", "NOT TO OPEN", or just only shows "HOT" or any acceptable symbol thereof. The warning **108** shall have a sufficiently visible size such that it is clearly visible to the user. Additionally, or alternatively, the warning **110** can be a "cross" sign or red in color, or any other signage to suit socio-legal requirement.

In some embodiments, a buzzer (not shown) can be associated with the pump **100.** The buzzer can help to alert the user in case the warning **108** is missed or is in a non-working state. Further, the pump **100** can be connected to a user smartphone (not shown) to push notifications regarding the warnings **108**, to timely update the user which can be remote from the pump **100.**

As already mentioned before although the depicted exemplary embodiments show a pump where the thermosensitive device is realized as a removable cover that is adapted to allow flow of water through the pump, this only shows a specific embodiment of the thermosensitive device It is to be understood that the thermosensitive device could as well be embodied as a non-removable window anywhere at the pump that allows to inspect the water within its water channel from outside.

In some embodiments, the cover **106** and the thermosensitive liner **108** can be manufactured by three-dimensional printing (also known as additive manufacturing or **3**D printing). Moreover, use of **3**D printing allows more freedom in choice of materials such as plastics, polymers, metals, or any other material as know or used in the art.

During implementation of the pump **100**, the cover **106** and/or the thermosensitive liner **108** can be opened manually. This avoids the need of any other equipment such as auxiliary tools (say screwdrivers, chisels, hammers and the like).

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- 100: Pump
- 102: Body
- 104: Water Channel
- 106: Cover
- 108: Thermosensitive liner
- 110: Warning
- 112: Inlet
- 114: Outlet
- 116: Filter
- 118: Water Flow
- 120: Opening

## Claims

1. A pump (**100**) comprising:
a body (**102**);
a water channel (**104**) adapted to allow flow of water through the pump (**100**);
a device (**106**) arranged with the body (**102**),
the device (**106**) is in contact with the water flowing through the water channel (**104**) and is visible from outside the pump (**100**);
**characterized in that:**
the device (**106**) is adapted to indicate temperature of water flowing through the water channel (**104**) by exhibiting a color change.

2. The pump (**100**) of claim 1, wherein the device (**106**) is a window adapted to inspect the water flowing through the water channel (**104**).

3. The pump (**100**) of claim 1 or 2, wherein the device (**106**) is a cover that provides access to the water channel (**104**).

4. The pump (**100**) of claim 3, wherein the cover (**106**) is transparent.

5. The pump (**100**) of any of the preceding claims, wherein the device (**106**) further comprises a thermosensitive element disposed on it.

6. The pump (**100**) of claim 5, wherein the thermosensitive element is a thermosensitive liner (**108**) or a print on the device (**106**) itself.

7. The pump (**100**) of any of the preceding claims, wherein the device (**106**) is manufactured from any material that itself is able to change its color and/or its transparency with different temperatures.

8. The pump (**100**) of claim 1, wherein the pump (**100**) further includes an opening (**120**) which allows access to a filter (**116**).

9. A device (**106**) to be associated with the pump (**100**) according to the claims 1 to 8.

10. A device (**106**) of claim 9, wherein the device (**106**) is manufactured using a three-dimensional (3-D) printing process.

11. A device (**106**) of claims 9 or 10, wherein a data file is provided having pre-stored instructions to print the device (**106**) using a three-dimensional (3-D) printer.

12. A device (**106**) of any of the claims 9-11, wherein the device (**106**) is presented in digital format.

13. A thermosensitive liner (**108**) to be associated with the pump (**100**) according to the claims 1 to 8.

14. A thermosensitive liner (**108**) of claims 13, wherein a data file is provided having pre-stored instructions to print the thermosensitive layer (**108**) using a three-dimensional (3-D) printer.

15. A thermosensitive liner (**108**) of claims 13 or 14, wherein the thermosensitive layer (**108**) is presented in digital format or is manufactured using a three-dimensional (3-D) printing process.
